# EUROPÄISCHE PATENTSCHRIFT

(11) **EP 1 496 600 B1**
(45) Veröffentlichungstag und Bekanntmachung des Hinweises auf die Patenterteilung: **02.05.2012**
(21) Anmeldenummer: 04015931.1
(22) Anmeldetag: 07.07.2004
(51) Int. Cl.: H02K 7/06

(54) **Linearantrieb**
Linear actuator
Actionneur linéaire

(30) Priorität: 11.07.2003 DE 10332389
(43) Veröffentlichungstag der Anmeldung: 12.01.2005
(73) Patentinhaber: Saia-Burgess Dresden GmbH, 01257 Dresden (DE)
(72) Erfinder: Flemming, Dietmar, 01796 Pirna (DE); Howack, Gerd, 01731 Kreischa (DE)
(74) Vertreter: Grüneberg, Marcus

(56) Entgegenhaltungen:
- EP-A- 1 103 332
- WO-A-99/44274
- DE-A1- 19 807 147
- US-A- 3 548 227

## Beschreibung

Die Erfindung betrifft einen Linearantrieb für Stellvorgänge zur Erzeugung translatorischer Vorschubbewegungen.

Aus dem Stand der Technik sind Linearmotoren und Linearspindelmotoren als Linearantriebe bekannt. Während bei einem Linearmotor im Betrieb ein Wanderfeld zwischen dem stromdurchflossenen Primärteil und dem Reaktionsteil entsteht, wird beim Linearspindelmotor hingegen ein Drehfeld erzeugt, dass zur Umwandlung einer Rotationsbewegung des Rotors in eine Translationsbewegung der Gewindespindel genutzt wird.

Linearspindelmotoren weisen einen stromdurchflossenen Stator und einen rotierenden Rotor auf, in dem ein Drehfeld induziert wird. Am oder im Rotor ist eine Gewindemutter angeordnet, die bei Rotation des Rotors eine passfähige Schraube oder Gewindespindel antreibt. Die axiale Vorschubbewegung der Spindel wird genutzt, um eine Stellbewegung eines Stellorgans auszuführen.

Derartige Linearspindelmotoren werden in der Praxis im Bereich der Laborund Medizintechnik, der Sortiertechnik, der Lebensmittelindustrie, im Werkzeugmaschinenbau, in der Haus- und Gebäudetechnik, der Verpackungsindustrie sowie im Kraftfahrzeugbereich und der Unterhaltungselektronik eingesetzt.

Beispielsweise wird im Bereich der Kraftfahrzeugtechnik die Verstellung der Scheinwerfer und im Bereich der Medizin- und Labortechnik das Öffnen und Schließen der Ventile oder anderer Drosseleinrichtungen durch Linearspindelmotoren realisiert.

In der Druckschrift US 6,223,971 B1 ist eine Antriebseinheit für eine Schweißmaschine offenbart. Hierbei besteht die Antriebeinheit aus bestrombaren Spulen und einem Rotor, der als Hohlwelle ausgebildet ist. Die Lagerung des Rotors erfolgt zweifach unter Verwendung von Radiallagern.
Der Rotor ist mittels Verbindungselementen mit einer Spindel gekoppelt. Ferner ist eine Stellstange mit Innengewinde vorgesehen, die auf der Spindel axial gleitet. Das axiale und außerhalb liegende Ende der Stellstange kann mit einem Funktionselement für Schweißarbeiten gekoppelt werden. Dabei ist die Stellstange vollständig über ihre Längserstreckung mit dem bereits erwähnten Innengewinde ausgestattet. An der Nodrive-Seite der Antriebseinheit ist ein nicht näher bezeichnetes Lagerschild angeordnet, welches von einem axialen Ende der Spindel durchdrungen wird. An diesem axialen Ende der Spindel ist eine Stellschraube angeordnet, um die Spindel und somit auch die die Spindel vollständig umschließende Stellstange im Bedarfsfall manuell bedienen zu können.

Der Nachteil dieser Linearspindelmotoren besteht vor allem darin, dass sie konstruktionsbedingt eine große Baulänge aufweisen und eine nicht unerhebliche Geräuschemission verursachen. Ursächlich dafür ist die Lagerung des Rotors mittels eines Wälzlagers und eines als Gleitlager ausgebildeten Notlagers zu nennen. Während der Bestromung des Linearmotors erzeugt das Wälzlager ein Kippmoment, was dazu führt, dass der Rotor nicht mehr parallel zum Stator geführt wird. Durch eine Kippung kann ein Schleifen des Rotors am Stator auftreten.

Ein weiterer signifikanter Nachteil eines Bauteils des Linearspindelmotors, speziell der Gewindespindel, besteht darin, dass ihre Fertigung sehr aufwendig ist. Während die Gewindespindel im Wirkungsbereich der Gewindemutter ein Außengewinde aufweisen muss, ist sie im Bereich der Verdrehsicherung üblicherweise als Vierkant und außerhalb der Verdrehsicherung als kreisrunder Stab oder Stange ausgebildet.

Es besteht seit geraumer Zeit bei Betreibern der Wunsch, Linearantriebe zu entwickeln, die zur Funktionserfüllung nur ein geringes Spaltmaß zwischen Rotor und Stator benötigen und dadurch einen höheren Wirkungsgrad sowie eine erhöhte Laufruhe sicherstellen.

Aufgabe der Erfindung ist es, einen Linearantrieb für Stellvorgänge zu entwickeln, der bei gleichem Funktionsumfang preisgünstiger zu fertigen ist, der kompakter ausgebildet ist und der eine höhere Laufruhe aufweist.

Diese Aufgabe wird erfindungsgemäß dadurch gelöst, indem der Rotor, der eine axial angeordnete sowie ein Außengewinde aufweisende Rotorwelle besitzt, glockenförmig mit einer offenen Stirnseite und einer geschlossenen Stirnseite ausgebildet ist, und eine die Rotorwelle mindestens teilweise einschließende und an der offenen Stirnseite des Rotors herausgeführte Stellstange für die Linearbewegung vorgesehen ist, deren im Rotor befindliches erstes Ende eine passfähige, auf der Rotorwelle mit Außengewinde aufsitzende Gewindemutter aufweist. Die Lagerung der Rotorwelle erfolgt durch an ihren axialen Enden über beide Stirnseiten des glockenförmigen Rotors hinaus reichende Gleitlagerzapfen, die jeweils in einem Gleitlager geführt sind und die an oder innerhalb der Lagerschilde platziert sind..

Der glockenförmig ausgebildete Rotor erstreckt sich stirnseitig zwischen den Lagerschilden des Gehäuses, wobei die offene Stirnseite des Rotors in Richtung des Drive-Lagerschildes und die geschlossene Stirnseite des Rotors in Richtung des Nodrive-Lagerschildes weist. Innerhalb des glockenförmigen Rotors ist die mindestens an der offenen Stirnseite des Rotors überstehende Rotorwelle, die mit einem Außengewinde versehen ist, axial angeordnet, wobei die aus der offenen Stirnseite des Rotors herausragende und die Rotorwelle mindestens teilweise umschließende Stellstange mit ihrer Gewindemutter passfähig aufsitzt.

Die gabelförmige bzw. hohlzylindersegmentförmige Stellstange, die in ihrer Längserstreckung die Rotorwelle mindestens teilweise einschließt, weist ein erstes Ende auf, das als Gewindemutter ausgebildet ist und mit der Rotorwelle in axialer Wirkverbindung steht. Der sich daran anschließende Bereich der Stellstange weist die Form von Hohlzylindersegmenten auf, deren Enden sich auch in eingezogener Position der Stellstange über den Bereich des Drive-Lagerschildes hinaus erstrecken.

Das erste Ende und das zweite Ende der Stellstange sind kraftschlüssig und/oder formschlüssig durch mindestens einen Gabelschenkel oder durch Hohlzylindersegmente miteinander verbunden. In einer bevorzugten Ausführungsform sind jedoch aus Gründen einer gleichmäßigen Kraftverteilung und -übertragung die Gabelschenkel paarweise ausgebildet und diametral angeordnet.

Der oder die Gabelschenkel durchdringen das Drive-Lagerschild, so dass eine Linearbewegung in Richtung des Drive-Lagerschilds realisiert werden kann.

Erfindungsgemäß ist der Querschnitt des oder der Gabelschenkel oder der Hohlzylindersegmente der Stellstange der Querschnittsform eines Durchbruchs im Drive-Lagerschildes angepasst, so dass die Stellstange torsionssicher und formschlüssig mit Spielpassung im Durchbruch des Drive-Lagerschildes geführt und gehaltert ist. Der Durchbruch des Drive-Lagerschild ist demnach als Verdrehsicherung und Linearführung ausgebildet, um eine Verkippung der Stellstange (Gewindemutter) zu verhindern.

Die an dem Rotor befestigte Rotorwelle ist im Gegensatz zu herkömmlichen Rotoren mittels zweier identisch ausgebildeter Gleitlager gelagert, was mehrere Vorteile mit sich bringt. Zum einen kann auf ein kostenintensives Wälzlager verzichtet werden und zum anderen neigt der Rotor bei der Rotation zu keinem Kippspiel. Die Rotorwelle besitzt durch die stabile Lagerung nur einen Freiheitsgrad. Die axialen Enden der Rotorwelle sind als Gleitlagerzapfen ausgebildet, die über die Stirnseiten des glockenförmigen Rotors hinaus reichen. Ein weiterer nicht zu unterschätzender Vorteil dieser Gleitlager besteht darin, dass der Luftspalt zwischen dem Stator und dem Rotor in Richtung der Längserstreckung des Rotors des Linearantriebs konstant ausgebildet ist. Der Luftspalt beträgt zwischen 0,1 mm und 0,4 mm. Dadurch, dass die Gleitlager zu keinem Kippspiel neigen, bleibt dieser Luftspalt zwischen Stator und Rotor auch während der Bestromung des Linearantriebs konstant, was zu einer erheblichen Geräuschreduzierung und damit Laufruhe gegenüber den Linearantrieben aus dem Stand der Technik führt.

Die Gleitlager sind als kombinierte Quer- und Längslager ausgebildet und können somit radiale und axiale Kräfte aufnehmen. Dem radialen Kraftangriff der Rotorwelle wird mittels zweier Lagerschalen oder einer Lagerbuchse begegnet, in denen die Mantelflächen der Endbereiche der Rotorwelle gleiten. Diese Endbereiche sind bevorzugt als Gleitlagerzapfen ausgebildet. Zur Ableitung der axialen Kräfte, die u.a. durch das axiale Bewegungsspiel der Rotorwelle erzeugt werden, werden Axiallager eingesetzt. Diese Axiallager weisen vorzugsweise Lagerplatten, beispielsweise aus Stein oder Metall auf, die die Stirnseiten der Gleitlagerzapfen der Rotorwelle einfassen und kontaktieren. Diese Lagerplatten sind mit jeweils einer ebenen und einer balligen Fläche ausgebildet.

In einer bevorzugten Ausgestaltung der Erfindung wird anstelle einer Spurplatte eine Kugel eingesetzt. Kugeln sind auf Grund ihrer Formgebung besonders gut geeignet, um die bei der Rotation auftretende Hertzsche Pressung, die zwischen den Gleitlagerzapfen und dem Gleitlager auftritt, zu verkleinern. Zudem können handelsübliche Metallkugeln eingesetzt werden, die wesentlich preiswerter als Lagerplatten zu fertigen sind.

Die Gleitlager können aus allen üblichen Lagermaterialien, wie z. B. Sinter-Bronze, Kunststoff oder Messing gefertigt sein. Um bei hohem Lastspiel Abrieb an den Gleitlagerzapfen der Rotorwelle zu vermeiden und gute Reibwerte zu erzielen, sind diese vorzugsweise aus härteren Material wie die Gleitlager gefertigt.

Nach der Konzeption der Erfindung wird die lineare Stellbewegung der Stellstange über eine Koppelstelle auf ein anwendungsspezifisches Funktionselement übertragen. Die Koppelstelle ist aus Gründen der Auswechselbarkeit vorzugsweise außerhalb des Gehäuses angeordnet.

Die Stellstange erstreckt sich demnach vom Gehäuseinneren bis zur Koppelstelle, während dessen sich das Funktionselement von der Koppelstelle bis zu einem Stellorgan erstreckt.

Die Koppelstelle kann als separates Bauteil ausgebildet oder an die Stellstange angeformt sein. Als besonders vorteilhaft in Bezug auf die axiale Kraftübertragung hat sich erwiesen, wenn die Stellstange mittels Bajonett- oder Schnappverbindungen oder vergleichbaren formschlüssigen Verbindungselementen mit dem Funktionselement in Eingriff gebracht wird. In einer bevorzugten Ausführungsform werden Klammern eingesetzt, welche hohe Zug- und Schubkräfte übertragen.

Ein besonderer Vorteil des erfindungsgemäßen Linearantriebs besteht darin, dass das mit einer Gewindemutter ausgebildete erste Ende der Stellstange nur innerhalb des glockenförmigen Rotors axial beweglich geführt wird, was zu einer deutlichen Baulängenreduzierung des Linearantriebs beiträgt.

Die signifikanten Vorteile und Merkmale der Erfindung gegenüber dem Stand der Technik sind im Wesentlichen:
- kompaktere Bauweise und kürzere Baulänge gegenüber herkömmlichen Linearspindelmotoren, da die Stellstange nur innerhalb des glockenförmigen Rotors bzw. des Drive-Lagerschildes axial beweglich ausgebildet ist, wobei durch eine Verlängerung des Drive-Lagerschildes eine Verlängerung des Stellweges der Stellstange erzielt,
- durch die Trennung der Axial- und Radiallagerung ist eine besonders preisgünstige Ausführung der Lagerelemente möglich,
- Luftspalt zwischen Rotor und Stator ist in Richtung der Längserstreckung des Linearmotors konstant, da anstelle eines Wälzlagers (Gefährdung durch Kippspiel !) zwei Gleitlager angeordnet sind, womit eine höhere Laufruhe entsteht und
- lineare Stellbewegung der Stellstange wird über eine Koppelstelle auf ein anwendungsspezifisches Funktionselement übertragen, wobei die Koppelstelle außerhalb des Linearmotors angeordnet ist und damit die Möglichkeit besteht, anwendungsspezifische Funktionselemente in besonders vorteilhafter Weise anzukoppeln, ohne die gesamte Stellstange oder wie bislang, die gesamte Spindel oder Schraube, auszutauschen zu müssen.

Verschiedene Lösungen und Vorteile der Erfindung erschließen sich dem Fachmann des Weiteren aus der folgenden detaillierten Beschreibung einer bevorzugten Ausführungsform im Hinblick auf die anliegenden Zeichnungen; in diesen zeigen:
- Fig. 1a: schematische Darstellung eines Linearspindelmotors aus dem Stand der Technik im Querschnitt
- Fig. 1b: schematische Darstellung des Drive-Lagerschilds des Linearspindelmotors aus dem Stand der Technik im Axialschnitt
- Fig. 1c: schematische Darstellung des Drive-Lagerschilds des Linearspindelmotors aus dem Stand der Technik im Querschnitt
- Fig. 2a: schematische Darstellung des erfindungsgemäßen Linearantriebs im Querschnitt
- Fig. 2b: schematische Darstellung des Drive-Lagerschilds des erfindungsgemäßen Linearantriebs im Axialschnitt
- Fig. 2c: schematische Darstellung des Drive-Lagerschilds des erfindungsgemäßen Linearantriebs im Querschnitt
- Fig. 3: Detaildarstellung des erfindungsgemäßen Linearantriebs
- Fig. 4: perspektivische Gesamtdarstellung des erfindungsgemäßen Linearantriebs

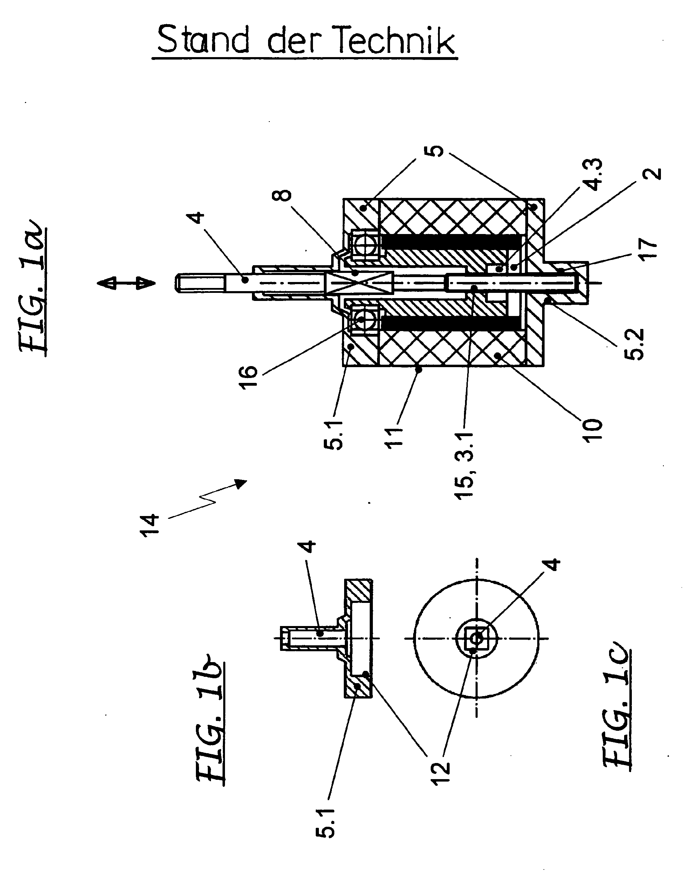

Die Fig. 1 a zeigt eine schematische Darstellung eines Linearspindelmotors 14 aus dem Stand der Technik im Querschnitt. Der Linearspindelmotor 14 umfasst den Stator 10, das Gehäuse 11, die stirnseitig das Gehäuse 11 umfassenden Lagerschilde 5, den Rotor 2 mit angeschlossener Gewindemutter 4.3, die Gewindespindel 15 und die Stellstange 4. Die Gewindespindel 15 weist ein Außengewinde 3.1 auf, das sich maximal bis zum Drive-Lagerschild 5.1 erstreckt. Die Gewindespindel 15 steht kraft- und/oder formschlüssig mit einer Stellstange 4 in axialer Wirkverbindung. In Stellrichtung ist die Stellstange 4 unmittelbar im Bereich des Drive-Lagerschildes 5.1 als Vierkant ausgebildet und wird von einer des Querschnitts dieses Vierkants entsprechenden Durchführung durch Verdrehen gesichert. Diese Durchführung ist als Verdrehsicherung 8 ausgeführt. In Stellrichtung ist die Stellstange 4 im Bereich außerhalb der Verdrehsicherung 8 als Stab oder als Stange mit einer glatten Oberfläche ausgebildet, wobei das außerhalb des Gehäuses 11 befindliche axiale Ende der Stellstange 4 gleichzeitig als ein nicht näher dargestelltes Funktionselement 13 ausgebildet ist. Die Lagerung des zylinderförmigen Rotors 2 erfolgt mittelbar über die Stellstange 4 und die Gewindespindel 15.

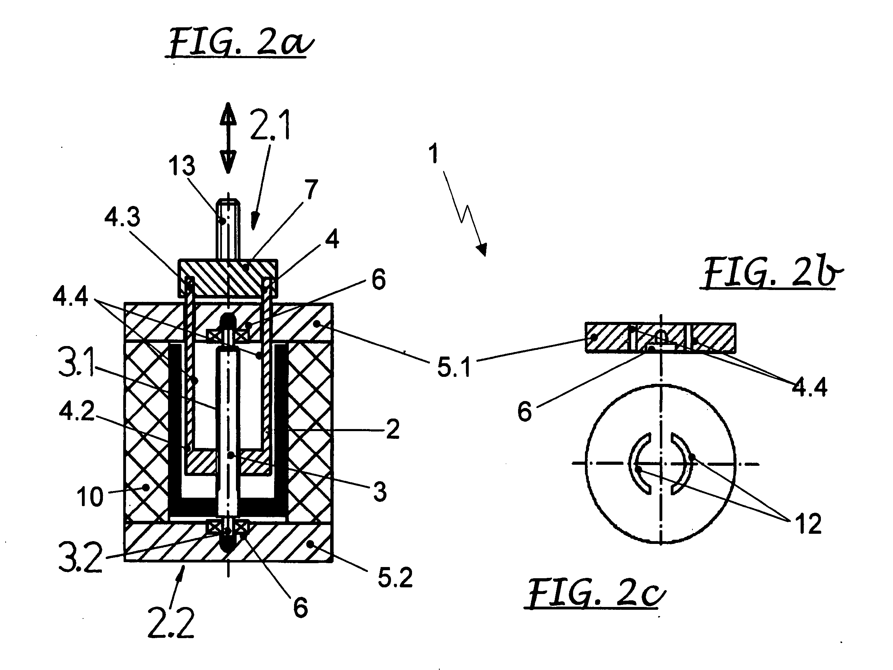

Die Gewindespindel 15 ist dabei mittels eines Notlagers 17 und die mit dieser Gewindespindel 15 in axialer Wirkverbindung stehende Stellstange 4 mittels eines Wälzlagers gelagert.
Das Wälzlager 16 ist üblicherweise im Bereich des Drive-Lagerschildes 5.1 angeordnet, während dessen das als Gleitlager ausgebildete Notlager 17 im Bereich der Nodrive-Lagerschildes 5.2 angeordnet ist. Das Notlager 17 ist derart ausgebildet, um die das axiale Bewegungsspiel der Gewindespindel 15 in jedem Betriebszustand sicherzustellen. Als Betriebszustand soll jede Stellung der Gewindespindel 15 verstanden werden, die sie während ihrer Linearbewegung einnehmen kann. Wie in Fig. 2b ersichtlich, ist das Nodrive-Lagerschild 5.2 konzentrisch abgestuft und weist damit keine ebene Außenfläche auf. Die axiale Baulänge des Linearspindelmotors 14 wird durch den maximal möglichen Stellweg der Gewindespindel 15 und Stellstange 4 bestimmt.

Die Fig. 1b und 1c illustrieren eine schematische Darstellung des Drive-Lagerschilds 5.1 eines Linearspindelmotors 14 aus dem Stand der Technik im Axial- und Querschnitt. Das Drive-Lagerschild 5.1 weist einen zentralen Durchbruch in Form einer kreisrunden Bohrung auf. Der Durchmesser der Bohrung entspricht dem Außendurchmesser einer Gewindespindel 15, die durch die Bohrung axial geführt wird. Gegebenenfalls kann die Bohrung eine ringförmige Dichtung aufweisen. Die außerhalb des Drive-Lagerschildes 5.1 angeordnete Verdrehsicherung 8 ist mit einem koaxialen Kreis nur angedeutet.

Die Fig. 2a zeigt eine schematische Darstellung des erfindungsgemäßen Linearantriebs 1 im Querschnitt. Besonders auffällig ist, dass die Gewindemutter nicht wie bei herkömmlichen Linearspindelmotoren 14 mit dem Rotor 2 verbunden ist und damit einer Relativbewegung gegenüber dem Stator 10 unterliegt, sondern an einem Ende der gabelförmigen bzw. hohlzylindersegmentförmigen axial beweglichen Stellstange 4 innerhalb des Linearantriebs 1 befestigt ist, und damit einer Absolutbewegung gegenüber dem Stator 10 unterworfen wird. Ein erstes Ende 4.2 der Stellstange 4, das innerhalb des Rotors 2 angeordnet ist, ist zylinderförmig ausgebildet und weist eine Gewindemutter auf, die kraft und formschlüssig von einer Rotorwelle 3 axial angetrieben wird. Ein zweites Ende 4.3 der Stellstange 4 weist im Querschnitt zwei diametral zueinander angeordnete Segmente eines Kreisrings auf, wobei die beiden Enden 4.2, 4.3 der Stellstange 4 durch zwei Gabelschenkel bzw. Hohlsegmente 4.4 miteinander verbunden sind. Diese Gabelschenkel 4.4 sind durch den Durchbruch des Drive-Lagerschilds 5.1 geführt. Das außerhalb des Gehäuses befindliche zweite Ende 4.3 der gabelförmigen Stellstange 4 ist zugleich als Koppelstelle 7 ausgebildet. Die dargestellte Koppelstelle 7 steht mit einem Funktionselement 13 in axialer Wirkverbindung, wobei das Funktionselement 13 an die anwendungsspezifischen Aufgaben in besonderer Weise in seiner Form ausgebildet sein kann. Beispielsweise kann dieses Funktionselement 13 an seinem der Koppelstelle 7 abgewandten Ende eine Kugel oder einen als Mitnehmer ausgebildeten Flansch aufweisen. Es ist weiterhin erkennbar, dass die Rotorwelle 3 mit dem Rotor 2 fest verbunden ist. Die Rotorwelle 3 ist an ihren axialen Enden mittels zweier Gleitlager 6 gelagert. Im Gegensatz zu einem herkömmlichen Wälzlager 16 in Verbindung mit einem Notlager 17 gemäß Fig. 1a ist die Rotorwelle 3 nun stabiler gelagert und neigt nicht zu einem Kippspiel.
Die Fig. 2b und 2c illustrieren eine schematische Darstellung des Drive-Lagerschilds 5.1 des erfindungsgemäßen Linearantriebs 1 im Axial- und Querschnitt. Es ist erkennbar, dass das Drive-Lagerschild 5.1 einen zentralen Durchbruch aufweist, durch den die in der Fig. 2a dargestellte gabelförmige Stellstange 4 geführt und gehaltert wird. Der Durchbruch ist gleichzeitig als Verdrehsicherung 12 ausgebildet. Die Form des Durchbruchs entspricht dem Querschnitt der Gabelschenkel 4.4 der Stellstange 4. Die durch das Lagerschild 5.1 austretenden Gabelschenkel 4.4 bzw. Hohlzylindersegmente werden außerhalb des Gehäuses 11 durch ein hier dargestelltes Koppelelement 7 oder durch einen nichtdargestellten Steg (im Querschnitt Doppel-T-Form aufweisend) miteinander verbunden. Zwischen Stellstange 4 und Durchbruch kann eine nichtdargestellte Dichtung ausgebildet sein, die den Linearantrieb 1 gegenüber der Umgebung wassergeschützt abdichtet. Somit kann der Linearantrieb 1 auch in spritzwassergefährdeten Bereichen problemlos eingesetzt werden.

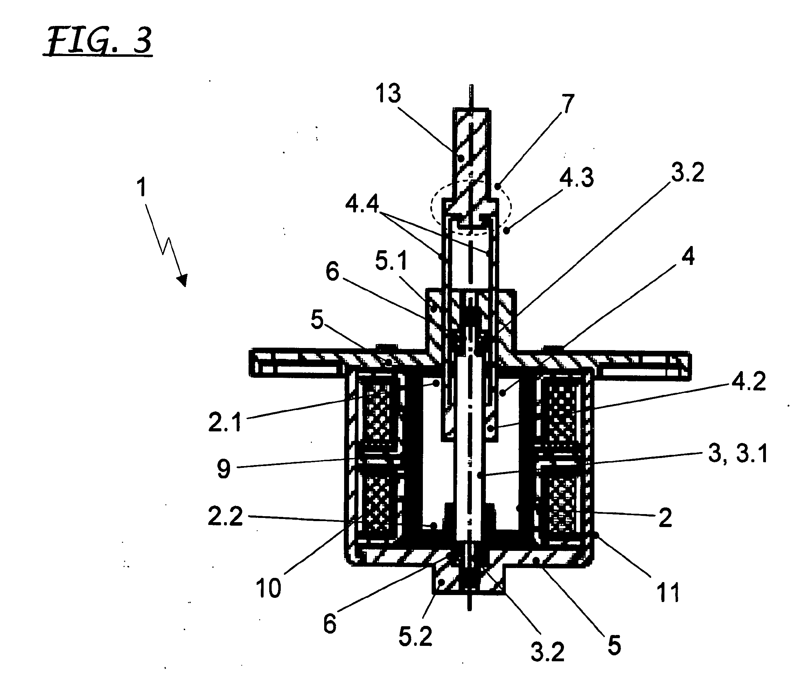

In Fig. 3 ist der erfindungsgemäße Linearantrieb 1 im Axialschnitt dargestellt. Der Linearantrieb 1 weist koaxial angeordnete Statorspulen 10, ein Gehäuse 11, einen axial angeordneten Rotor 2 mit Rotorwelle 3, eine mit der Rotorwelle 3 in Wirkverbindung stehende Stellstange 4 sowie das Gehäuse 11 stirnseitig begrenzende Lagerschilde 5 auf. Der Rotor 2 ist glockenförmig mit einer axial angeordneten Rotorwelle 3 mit Außengewinde 3.1 ausgebildet. Der Rotor 2 erstreckt sich innerhalb des Gehäuses 11 des Linearantriebes 1 zwischen den Lagerschilden 5 und weist eine offene Stirnseite 2.1 und eine geschlossene Stirnseite 2.2 auf. Die offene Stirnseite 2.1 des Rotors 2 ist dabei in Richtung des Drive-Lagerschildes 5.1 und die geschlossene Stirnseite 2.2 des Rotors 2 in Richtung des Nodrive-Lagerschildes 5.2 ausgebildet.
An der geschlossenen Stirnseite 2.2 des Rotors 2 ist die Rotorwelle 3 befestigt, die in ihrer Längserstreckung über die Stirnseiten 2.1, 2.2 des glockenförmigen Rotors 2 hinaus reicht. Die axialen Enden der Rotorwelle 3 sind als Gleitlagerzapfen 3.2 ausgebildet, die in die an den Lagerschilden 5 angeordneten Gleitlagern 6 eingreifen. Jedes Lagerschild 5.1, 5.2 weist jeweils ein Gleitlager 6 auf. Die Gleitlager 6 sind als kombinierte Quer- und Längslager derart ausgebildet, dass sie radiale und axiale Kräfte gleichermaßen aufnehmen können. Hierbei wurde ein herkömmliches Gleitlager 6, welches Lagerbuchsen oder Lagerschalen aufweist, um eine handelsübliche Kugel ergänzt. Diese Kugel ist innerhalb des Gleitlagers 6 angeordnet und kontaktiert stirnseitig die ebenen axialen Enden der Gleitlagerzapfen 3.2. Anstelle einer Kugel kann auch eine Lagerplatte eingesetzt werden, die eine ebene und eine ballige Fläche aufweist. Dadurch, dass die beiden Gleitlager 6 jeweils radiale und axiale Kräfte aufnehmen können, konnte auf ein teures Wälzlager 16 verzichtet werden. Ferner bildet sich durch die beidseitige Lagerung der Rotorwelle 3 mit gleichartigen Gleitlagern 6 ein konstanter Luftspalt 9 zwischen Stator 10 und Rotor 2 aus. Diese Konstanz bezieht sich einerseits auf den Abstand zwischen Stator 10 und Rotor 2 in Längserstreckung des Rotors 2, wobei dieser Luftspalt 9 bevorzugt 0,2 mm beträgt. Andererseits verändert sich dieser Luftspalt 9 auch nicht im Lastzustand, also bei Strombeaufschlagung des Linearantriebs 1. Die ein Außengewinde 3.1 aufweisende Rotorwelle 3 steht erfindungsgemäß mit einer ein passfähiges Innengewinde 4.1 aufweisenden Stellstange 4 derart in Wirkverbindung, dass eine Rotationsbewegung in eine translatorische Vorschubbewegung umgesetzt wird. Das erste Ende 4.2 der Stellstange 4 ist zylinderförmig mit einer Gewindemutter ausgebildet und der sich daran anschließende Bereich mit dem zweiten Ende 4.3 der Stellstange 4 weist die Form von Hohlzylindersegmenten, hier in der Ausführung als zwei diametral zueinander angeordnete Segmente eines Kreisrings, auf. Diese Hohlzylindersegmente 4.4 verbinden als Gabelschenkel 4.4 beide Enden 4.2, 4.3 der Stellstange 4 miteinander.
Das zylinderförmige erste Ende 4.2 der Stellstange 4 greift form- und kraftschlüssig in die Rotorwelle 3 ein, während dessen das hohlzylinderförmige zweite Ende 4.3 der Stellstange 4 außerhalb des Gehäuses 11 des Linearantriebs 1 mit einem Funktionselement 13 gekoppelt ist. Das Drive-Lagerschild 5.1, durch welches die Gabelschenkel 4.4 der Stellstange 4 geführt sind, ist mit einem der Querschnittsform der Gabelschenkel 4.4 entsprechenden Durchbruch ausgebildet. Dieser Durchbruch weist gemäß Fig. 3 zwei identische Schlitze bzw. Nuten auf, wobei diese Schlitze bzw. Nuten diametral zueinander angeordnet und in einem definierten Radius um das Gleitlager 6 gekrümmt ausgebildet sind. Der Durchbruch dient nicht nur als Führung der Stellstange 4, sondern auch als Verdrehsicherung 8. Da die Gabelschenkel 4.4 der Stellstange 4 und der Durchbruch gemäß den Fig. 2a bis 2c einen identischen Querschnitt aufweisen, wird die Stellstange 4 während ihrer Axialbewegung folglich geführt und gehaltert.

Die Stellstange 4 steht in axialer Wirkverbindung mit einem nicht näher dargestellten Funktionselement 13, wobei die Koppelstelle 7 zwischen der Stellstange 4 und des Funktionselements 13 außerhalb des Gehäuses 11 des Linearantriebs 1 ausgebildet ist. Diese Koppelstelle 7 dient als Schnittstelle zwischen der Stellstange 4 und dem Funktionselement 13. Das Funktionselement 13 dient verschiedenen Aufgaben, beispielsweise zur Öffnen und Schließen eines Ventils oder der Verstellung eines Scheinwerfers bei Kraftfahrzeugen.
Der Linearantrieb 1 ist damit universell für verschiedene Aufgabenfelder einsetzbar, denn eine Adaption des erfindungsgemäßen Linearantriebs 1 an die gewünschte Aufgabenstellung erfordert nur das Ankoppeln eines entsprechend ausgebildeten Funktionselements 13 an das außerhalb des Gehäuses des Linearantriebs 1 befindliche zweite Ende 4.3 der Stellstange 4 mittels der Koppelstelle 7. Diese ist bevorzugt als Bajonett ausgebildet, um hohe Montagekräfte auf den Rotor 2 zu vermeiden.

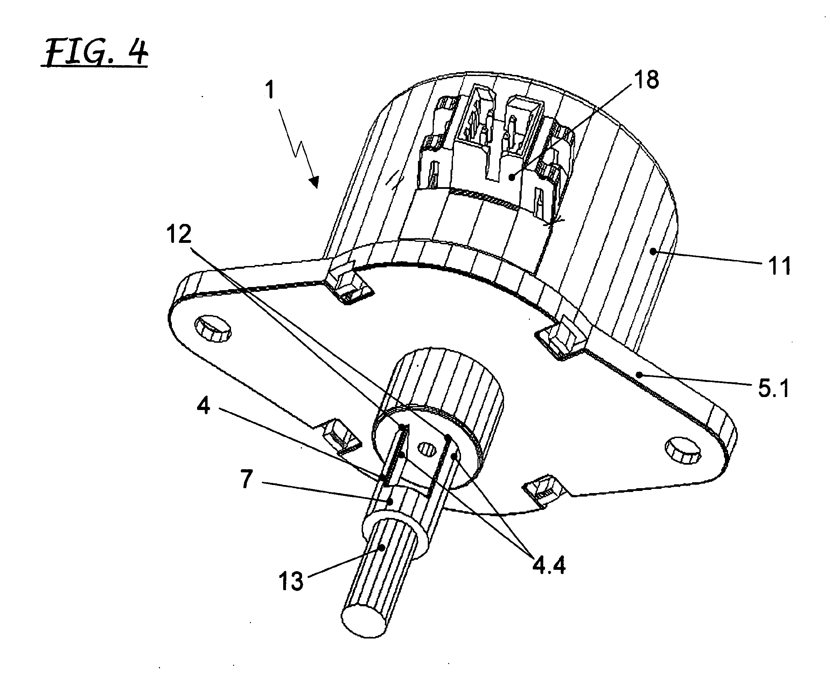

Eine perspektivische Gesamtdarstellung des erfindungsgemäßen Linearantriebs 1 stellt Fig. 4 dar. Die Stromversorgung des Linearantriebs 1 erfolgt mittels eines das Gehäuse des Linearantriebs 1 durchdringenden elektrischen Anschlusses 18. Es ist erkennbar, dass die mit dem Funktionselement 13 in axialer Wirkverbindung stehende Stellstange 4 mittels eines Koppelelements 7 gekoppelt ist. Die Gabelschenkel 4.4 der Stellstange 4 sind durch den als Verdrehsicherung 12 ausgebildeten Durchbruch das Drive-Lagerschild 5.1 formschlüssig geführt und gehaltert.

### LISTE DER BEZUGSZEICHEN

- 1: Linearantrieb
- 2: Rotor
- 2.1: offene Stirnseite des Rotors
- 2.2: geschlossene Stirnseite des Rotors
- 3: Rotorwelle
- 3.1: Außengewinde
- 3.2: Gleitlagerzapfen
- 4: Stellstange
- 4.1: Innengewinde
- 4.2: erstes Ende der Stellstange
- 4.3: zweites Ende der Stellstange
- 4.4: Gabelschenkel, Hohlzylindersegmente
- 5: Lagerschilde
- 5.1: Drive-Lagerschild
- 5.2: Nodrive-Lagerschild
- 6: Gleitlager
- 6.1: Kugel
- 7: Koppelstelle
- 8: Verdrehsicherung im Stand der Technik
- 9: Luftspalt
- 10: Stator
- 11: Gehäuse
- 12: Verdrehsicherung, Durchbruch
- 13: Funktionselement
- 14: Linearspindelmotor
- 15: Gewindespindel
- 16: Wälzlager
- 17: Notlager
- 18: elektrischer Anschluss

## Patentansprüche

1. Linearantrieb für Stellvorgänge zur Erzeugung translatorischer Vorschubbewegungen, mindestens aufweisend ein Gehäuse (11), Lagerschilde (5), die dieses Gehäuse (11) stirnseitig begrenzen, einen Stator (10), einen Rotor (2) mit einer axial angeordneten mit einem Außengewinde (3.1) ausgebildeten Rotorwelle (3), eine Gewindemutter und eine bewegliche Schraube/Spindel, **dadurch gekennzeichnet, dass** der Rotor (2) glockenförmig mit einer offenen Stirnseite (2.1) und einer geschlossenen Stirnseite (2.2) ausgebildet ist, und eine die Rotorwelle (3) mindestens teilweise einschließende und an der offenen Stirnseite (2.1) des Rotors (2) herausgeführte Stellstange (4) für die Linearbewegung vorgesehen ist, wobei deren im Rotor befindliches erstes Ende (4.2) eine passfähige auf der Rotorwelle (3) mit Außengewinde (3.1) aufsitzende Gewindemutter aufweist, und die Rotorwelle an ihren axialen Enden über beide Stirnseiten (2.1, 2.2) des glockenförmigen Rotors (2) hinaus reichende Gleitlagerzapfen (3.2) aufweist, die jeweils in einem Gleitlager (6) geführt sind und die an oder innerhalb der Lagerschilde (5) platziert sind.

2. Linearantrieb nach Anspruch 1, **dadurch gekennzeichnet, dass** die Stellstange (4) gabelförmig oder hohlsegmentförmig ausgebildet ist und das erste Ende (4.2) sowie das zweite Ende (4.3) der Stellstange (4) durch mindestens einen Gabelschenkel (4.4) miteinander verbunden sind.

3. Linearantrieb nach Anspruch 1 oder 2, **dadurch gekennzeichnet, dass** der oder die als Hohlzylindersegmente ausgebildeten Gabelschenkel (4.4) durch einen dem Querschnitt des oder der Gabelschenkel(s) (4.4) angepassten Durchbruch (12) des Drive-Lagerschildes (5.1) torsionssicher und formschlüssig mit einer Spielpassung geführt sind.

4. Linearantrieb nach einem der Ansprüche 1 bis 3, **dadurch gekennzeichnet, dass** der Durchbruch des Drive-Lagerschild (5.1) als Verdrehsicherung (8) ausgebildet ist.

5. Linearantrieb nach Anspruch 1, **dadurch gekennzeichnet, dass** die Mantelflächen der Gleitlagerzapfen (3.2) der Rotorwelle (3) in einer Lagerbuchse oder in Lagerschalen des Gleitlagers (6) gleiten und die Stirnseiten der Gleitlagerzapfen durch Lagerplatten axial im Gleitlager (6) eingefasst sind.

6. Linearantrieb nach Anspruch 5, **dadurch gekennzeichnet, dass** anstelle einer Lagerplatte eine Kugel verwendet wird, die stirnseitig den Gleitlagerzapfen (3.2) einfasst und kontaktiert.

7. Linearantrieb nach einem der Ansprüche 1 bis 6, **dadurch gekennzeichnet, dass** der Luftspalt (9) zwischen Stator (10) und Rotor (2) in Richtung der Längserstreckung des Rotors (2) konstant ausgebildet ist und zwischen 0,1 und 0,3 mm beträgt.

8. Linearantrieb nach einem der Ansprüche 1 bis 7, **dadurch gekennzeichnet, dass** die Stellstange (4) in axialer Wirkverbindung mit einem Funktionselement (13) gekoppelt ist, wobei die Koppelstelle (7) zwischen der Stellstange (4) und dem Funktionselement (13) außerhalb des Gehäuses (11) des Linearantriebs (1) ausgebildet ist.

## Claims

1. Linear drive system for actuating processes in order to produce translatory advance movements, having at least a casing (11), end shields (5) forming the boundary of this casing (11) at the faces, a stator (10), a rotor (2) with a rotor shaft (3) arranged axially and having a male thread (3.1), a threaded nut and a movable screw/spindle, **characterized in that** the rotor (2) is designed bell-shaped with an open face (2.1) and a closed face (2.2) and an actuating rod (4) enclosing the rotor shaft (3) at least partly and passing out of the open face (2.1) of the rotor (2) is provided for the linear movement, with the first end (4.2) of the actuating rod having a threaded nut fitting on the male thread (3.1) of the rotor shaft (3), and the rotor shaft has plain bearing journal pins (3.2) at its axial ends, protruding from both faces (2.1, 2.2) of the bell-shaped rotor (2) and each of them guided in a plain bearing (6) and placed at or in the end shields (5).

2. Linear drive system according to claim 1 **characterized in that** the actuating rod (4) is designed as a fork shape or hollow segment shape and the first end (4.2) as well as the second end (4.3) of the actuating rod (4) are linked with each other by at least one fork leg (4.4).

3. Linear drive system according to claim 1 or 2 **characterized in that** the fork leg(s) (4.4) designed as hollow cylinder segments are guided through an opening (12) of the drive side end shield (5.1.) matching the cross section of the fork leg(s), and this in a torsion-proof and form-fitting manner with a clearance fit.

4. Linear drive system according to one of claims 1 to 3 **characterized in that** the opening of the drive side end shield (5.1) is designed as an anti-twist device (8).

5. Linear drive system according to claim 1 **characterized in that** the envelope surfaces of the journal pins (3.2) of the rotor shaft (3) slide in a bearing bush or in bearing shells of the plain bearing (6) and the faces of the journal pins are surrounded axially in the plain bearing (6) by bearing plates.

6. Linear drive system according to claim 5 **characterized in that** a ball is used instead of a bearing plate, enclosing and contacting the journal pin at the face (3.2).

7. Linear drive system according to one of claims 1 to 6 **characterized in that** the air gap (9) between stator (10) and rotor (2) is constant along the length of the rotor (2) and is between 0.1 and 0.3 mm.

8. Linear drive system according to one of claims 1 to 7 **characterized in that** the actuating rod (4) is coupled with a functional element (13) in an operative connection, with the coupling point (7) between the actuating rod (4) and the functional element (13) being designed outside the casing (11) of the linear drive (1).

## Revendications

1. Système d'entraînement linéaire pour procédés d'actionnement visant à produire des mouvements d'avance translatoires, ayant au moins un boîtier (11), des flasques (5) bornant ce boîtier (11) sur ses faces, un stator (10), un rotor (2) pourvu d'un arbre rotor (3) en disposition axiale et muni d'un filetage mâle (3.1), un écrou fileté et une vis/broche mobile, **caractérisé en ce que** le rotor (2) est en forme de cloche avec une face ouverte (2.1) et une face close (2.2) et qu'une tringle d'actionnement (4) encadrant l'arbre rotor (3) au moins partiellement et sortant par la face ouverte (2.1) du rotor (2) est prévue pour le mouvement linéaire, dont la première extrémité (4.2.), se trouvant dans le rotor, est pourvue d'un écrou fileté approprié positionné sur l'arbre rotor (3) avec filetage mâle (3.1), et que l'arbre rotor, à ses extrémités axiales, présente des tourillons de palier lisse (3.2.) débordant des deux faces (2.1, 2.2) du rotor (2) en forme de cloche, chacun étant guidé dans un palier lisse (6), et qui sont placés sur ou dans les flasques (5).

2. Système d'entraînement linéaire selon la revendication 1, **caractérisé en ce que** la tringle d'actionnement (4) est conçue en forme de fourche ou de segment creux et que et la première extrémité (4.2) et la seconde extrémité (4.3) de la tringle d'actionnement (4) sont liées l'une à l'autre par au moins une branche (4.4) de la fourche.

3. Système d'entraînement linéaire selon la revendication 1 ou 2, **caractérisé en ce que** la ou les branches de la fourche (4.4) en forme de segments cylindriques creux sont guidées à travers une ouverture (12) de la flasque côté entraînement (5.1) adaptée à la section transversale de la branche ou des branches de la fourche (4.4), et ce en ajustement avec jeu d'une manière résistante à la torsion et à engagement positif.

4. Système d'entraînement linéaire selon une des revendications 1 à 3, **caractérisé en ce que** l'ouverture de la flasque côté entraînement (5.1) est conçue comme dispositif protecteur contre la torsion (8).

5. Système d'entraînement linéaire selon la revendication 1, **caractérisé en ce que** les surfaces enveloppes des tourillons de palier lisse (3.2) de l'arbre rotor (3) glissent dans un coussinet ou dans des coquilles de coussinet du palier lisse (6) et que les faces des tourillons de palier lisse sont encadrées axialement dans le palier lisse (6) par les plaques d'appui.

6. Système d'entraînement linéaire selon la revendication 5, **caractérisé en ce que**, au lieu d'une plaque d'appui, une bille est utilisée, encadrant et contactant le tourillon de palier lisse (3.2) au côté face.

7. Système d'entraînement linéaire selon une des revendications 1 à 6, **caractérisé en ce que** l'entrefer (9) entre le stator (10) et le rotor (2) est constant tout au long de la longueur du rotor (2) et mesure entre 0.1 et 0.3 mm.

8. Système d'entraînement linéaire selon une des revendications 1 à 7, **caractérisé en ce que** la tringle d'actionnement (4) est accouplée à un élément fonctionnel (13) en liaison d'action axiale, le point d'accouplement (7) entre la tringle d'actionnement (4) et l'élément fonctionnel (13) se trouvant à l'extérieur du boîtier (11) du système d'entraînement linéaire (1).
